(19) Europäisches Patentamt / European Patent Office / Office européen des brevets

(11) **EP 3 865 851 A1**

(12) **EUROPEAN PATENT APPLICATION**

(43) Date of publication:
**18.08.2021 Bulletin 2021/33**

(21) Application number: **20156763.3**

(22) Date of filing: **11.02.2020**

(51) Int Cl.:
**G01N 21/17** (2006.01)  **G01N 29/24** (2006.01)
**G01B 9/02** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **CSEM Centre Suisse d'Electronique et de Microtechnique SA - Recherche et Développement 2002 Neuchâtel (CH)**

(72) Inventor: **HERR, Tobias 1110 Morges (CH)**

(74) Representative: **P&TS SA (AG, Ltd.) Avenue J.-J. Rousseau 4 P.O. Box 2848 2001 Neuchâtel (CH)**

(54) **PHOTOACOUSTIC DUAL COMB SPECTROMETER**

(57) Disclosed is a photoacoustic spectrometer (100) comprising an acoustic detector (109) adapted to detect an acoustic wave generated in a sample of interest (110) and a light source (101) generating two optical frequency combs (10a, 10b), presenting at least a partial overlap of their optical spectra, spatially arranged to co-propagate with significant spatial overlap in a region of the sample (110) and featuring a small difference between their characteristic repetition rates, adapted to the low response bandwidth of the acoustic detector (109). Also disclosed is a method of photoacoustic spectroscopy using the photoacoustic spectrometer (100).

Fig. 2

**100**

## Description

## Technical Field

The invention is in the field of photoacoustic spectroscopy, i.e., optical spectroscopy based on the acoustic detection of light absorption by the sample. In particular, the invention concerns a device implementing two optical frequency combs, with spatial overlap in a region of a sample of interest, and comprising optical frequencies adapted to produce a modulation signal that is detected by an acoustic detector such as a microphone.

The invention further concerns a method of using said device for spectroscopy applications.

## State of the art

Photoacoustic spectroscopy (PAS) is an absorption-based spectroscopy technique that involves absorption of a modulated or pulsed light beam, at a wavelength that overlaps with an absorption feature of molecules of interest, or more generally any material with characteristic light absorption features in which acoustic waves can propagate. The optical energy absorbed by the studied molecules (or material) is converted into periodic local heating at the modulation frequency and produces an acoustic wave in the sample that can be detected with an acoustic detector such as a microphone, piezo-electric transducers, cantilevers or any other sensor of mechanic pressure waves.

In traditional transmission-based optical spectroscopy, the absorbance of the specimen is deduced from the attenuation of the incident light after passing through the sample. In case of weak absorption, the attenuation signal must be extracted from a large background of detected transmitted light. This limits the sensitivity of traditional transmission-based techniques. In contrast, in PAS, the measured signal corresponds exclusively to the absorbed light, as non-absorbed light simply crosses the sample without producing an acoustic wave. This makes PAS particularly well-suited for weak absorption signals, for example, in gas spectroscopy, to determine the presence or concentration of target trace molecules.

Using a laser as light source for PAS has several advantages as compared to incoherent sources. This includes: high brilliance, enabling high optical fields in a small sample volume, and high energy density in a narrow spectral bandwidth, all of which contributes to producing a larger photoacoustic signal. On the other hand, laser sources often provide a reduced accessible range of wavelengths, which can be an important disadvantage for spectroscopy systems. The use of frequency combs as broad-spectrum laser sources has been proposed in order to overcome this problem, for example, in I. Sadiek et al. "Optical Frequency Comb Photoacoustic Spectroscopy", Conference Proceedings, CLEO 2019.

Sadiek et al. used an optical comb centered at 3.3 $\mu$m wavelength, with a spectral width of 255 nm, corresponding to 230 cm$^{-1}$, as the light source of a PAS system to measure the absorption lines of gaseous methane (100 ppm in $N_2$ at 1 bar). In order to spectrally resolve the absorption signal from the sample, Sadiek *et al.* implemented a Fourier Transform interferometer.

Fourier Transform spectroscopy had been combined before with photoacoustic detection, for example in J. Uotila et al., "Fourier transform infrared measurement of solid-, liquid-, and gas-phase samples with a single photoacoustic cell," Appl. Spectrosc. 62, 655-660 (2008), where a commercial FTIR spectrometer featuring an incoherent continuous broad-spectrum lamp was adapted for cantilever-enhanced photoacoustic detection.

A general disadvantage of FTIR systems is the need of mechanical moving parts to scan the optical path difference between the two interferometer arms. The spectral resolution expressed in cm$^{-1}$ is determined by the inverse of the scanning length. For example, in order to achieve 1 GHz spectral resolution (corresponding to 0.033 cm$^{-1}$) the optical path difference must be at least 30cm. Such long scanning ranges often limit the acquisition speed and result in bulky systems, prone to misalignment issues due to mechanical failure and vibration sensitivity.

Also, FTIR spectroscopy is hardly compatible with miniaturized systems and in particular with emerging technology platforms for photonics integrated circuits.

In this sense, dual comb spectroscopy (DCS) may constitute a convenient alternative to FTIR spectroscopy. DCS does not include any mechanical moving part and has a technical potential for implementation in a miniaturized system. The general principle of DCS has been described in US5748309. The similarity of DCS and FTIR is well known to the person skilled in the art. However, DCS is not an obvious off-the-shelf substitute for all existing FTIR applications. DCS is a complex technique facing technical challenges which has to be specifically addressed for each implementation.

In particular Sadiek *et al.* has mentioned the possibility of using DCS instead of FTIR for their photoacoustic experiment, but the authors discourage this approach due to the mismatch between the slow detection bandwidth of their acoustic detector (hundreds of Hertz), and the high bandwidth required in DCS systems as known in the prior art, typically in the MHz range and based on photodetectors.

There is thus a recognized need for a spectroscopy system that combines the high sensitivity of PAS, the high resolution and broad bandwidth of FTIR spectroscopy and the convenience of a system with no moving parts and high potential for miniaturization, like DCS.

## Disclosure of the invention

It is an aim of the present invention to propose a device combining the advantages of PAS, FTIR and DCS, overcoming the above-mentioned limitations of the prior art.

One aspect of the invention relates to a photoacoustic spectrometer comprising an acoustic detector adapted to detect an acoustic wave generated in a sample of interest and a light source consisting in two optical frequency combs, presenting at least a partial overlap of their optical spectra across an optical frequency range of width W, and spatially arranged to co-propagate with significant spatial overlap in a region of the sample. Said optical frequency combs feature a small difference $\Delta f_{rep}$ between their characteristic repetition rates, which is adapted to the response bandwidth $BW_{det}$ of the acoustic detector according to the relation

$$\Delta f_{rep} < BW_{det}\, f_{rep}\, /\, W$$

where $f_{rep}$ corresponds to the average repetition rate of the two optical frequency combs.

According to another aspect of the invention, the optical frequency combs implemented in the photoacoustic spectrometer, may advantageously cover substantially the same optical spectrum.

According to another aspect of the invention, the optical frequency combs implemented in the photoacoustic spectrometer, may be advantageously generated from a single cw-laser source, split in two independent channels, with each of said channels comprising an electro-optic modulator.

According to another aspect of the invention, the optical frequency combs implemented in the photoacoustic spectrometer, may be advantageously generated from a single cw-laser source, split in two independent channels, with each of said channels comprising an electro-optic modulator, wherein at least one of the channels further comprises an acousto-optic modulator.

According to another aspect of the invention, the optical frequency combs implemented in the photoacoustic spectrometer, may be advantageously generated from a single cw-laser source, split in two independent channels, with each of said channels comprising both, an electro-optic modulator and an acousto-optic modulator.

According to yet another aspect of the invention, the optical frequency combs implemented in the photoacoustic spectrometer, may be advantageously generated from two mode-locked laser oscillators.

According to yet another aspect of the invention, the optical frequency combs implemented in the photoacoustic spectrometer, may be advantageously generated in micro-optical resonators.

According to yet another aspect of the invention, the optical frequency combs implemented in the photoacoustic spectrometer, may be advantageously stabilized by active feedback loops.

According to yet another aspect of the invention, the optical frequency combs implemented in the photoacoustic spectrometer, may be initially generated in a first region of the optical spectrum, then broadened or shifted into a different region of the optical spectrum by means of non-linear optical elements.

According to yet another aspect of the invention, the optical frequency combs implemented in the photoacoustic spectrometer, may be spatially overlapped by combining them in a fiber-based coupler.

According to yet another aspect of the invention, the optical frequency combs implemented in the photoacoustic spectrometer, may be spatially overlapped by combining them in free space, by means of a beam splitter.

According to another aspect of the invention, the photoacoustic spectrometer may further comprise a photodetector arranged to detect fractions of power of the optical frequency combs, spatially overlapped on the photodetector.

According to yet another aspect of the invention, the repetition rates of the optical frequency combs implemented in the photoacoustic spectrometer, may be comprised in a range from 10 MHz to 100 GHz, and more advantageously, in a range from 500 MHz to 100 GHz.

The invention also concerns a method of photoacoustic spectroscopy comprising the steps of

    a) generating two optical frequency combs presenting at least a partial overlap of their optical spectra across an optical frequency range of width W, and featuring a small difference $\Delta f_{rep}$ between their characteristic repetition rates, wherein $\Delta f_{rep}$ is adapted to the response bandwidth $BW_{det}$ of an acoustic detector, according to the relation:

$$\Delta f_{rep} < BW_{det}\, f_{rep}\, /\, W$$

where $f_{rep}$ corresponds to the average repetition rate of the two optical frequency combs,
b) spatially arranging the two optical frequency combs to co-propagate with significant spatial overlap in a region of a sample of interest,
c) recording an acoustic wave generated at the sample of interest when the two optical frequency combs impinge on it, by means of the acoustic detector and
d) determining the frequency components of the recorded acoustic wave.

According to another aspect, the method of the invention may further comprise additional steps between b) and c), said additional steps comprising:

    b1) extracting fractions of power of the optical frequency combs and arranging them to spatially overlap on a photodetector,
b2) recording a time-domain interferogram from the photodetector signal,

b3) determining the frequency components of the recorded interferogram to obtain a spectrum of the optical heterodyne signal resulting from the interference of the two optical frequency combs and

performing an additional step after step d) comprising:
d1) using the spectrum of the optical heterodyne signal determined in b3) as an input to a weighting function to normalize the spectrum of the frequency components of the recorded acoustic wave determined in step d) of the method..

**Brief description of the drawings**

Further details of the invention will appear more clearly upon reading the description below, in connection with the following figures which illustrate:

- Fig. 1: schematic representation of the frequency spectra of two optical frequency combs according to the invention
- Fig. 2: schematic illustration of a preferred embodiment of the invention;
- Fig. 3A and Fig. 3B: schematic representation of the frequency spectra of two optical frequency combs, as generated (A) and as shifted (B) according to one embodiment of the invention;
- Fig. 4: schematic illustration of another possible embodiment of the invention

**Embodiments of the invention**

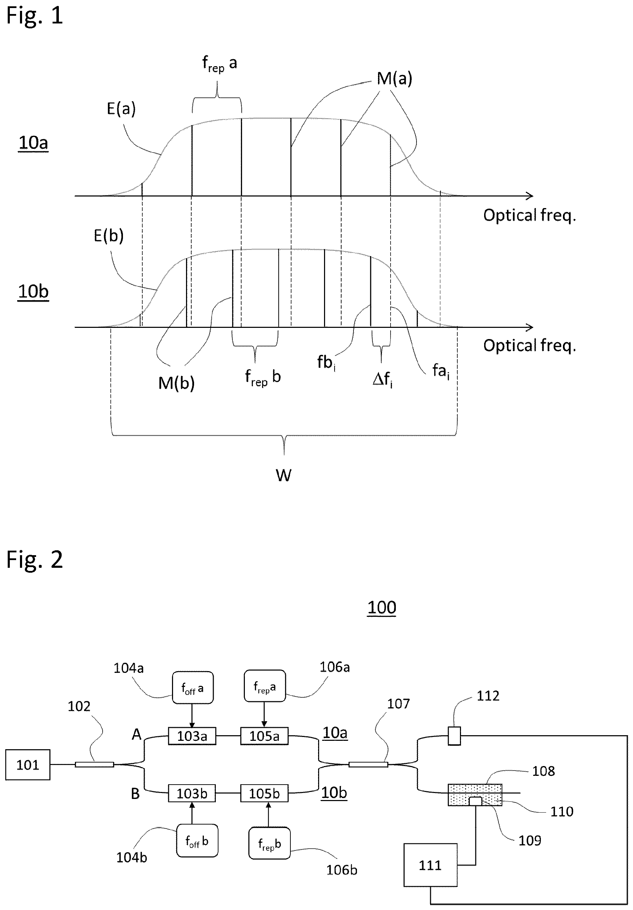

Figure 1 shows a schematic representation of the frequency spectra of two optical frequency combs 10a, 10b, adapted for DCS. The frequency combs of Figure 1 conveniently extend across the same range of the optical spectrum W, and present similar spectral envelopes E(a), E(b). Each comb is composed of discrete equidistant optical modes M(a), M(b), each mode separated by a characteristic frequency interval $f_{rep}a$, $f_{rep}b$, which corresponds to the repetition rate of the optical pulses generated by each frequency comb 10a, 10b.

The repetition rate of the two combs are similar but present a small difference: $\Delta f_{rep}$.

$$\Delta f_{rep} = \left| f_{rep}a - f_{rep}b \right|$$

$$\Delta f_{rep} << f_{rep}a \approx f_{rep}b$$

For each mode of the comb 10a of a given frequency $fa_i$, there is a neighbouring mode of the comb 10b with a similar frequency $fb_i$. "i" is used here as an integer index identifying one of the discrete modes of a frequency comb. When the frequency combs 10a and 10b are spatially overlapped, their modes of similar frequencies $fa_i$ and $fb_i$ interfere producing an amplitude modulation at a frequency $\Delta f_i = |fa_i - fb_i|$

Due to the slightly different spacing ($f_{rep}a \neq f_{rep}b$) between the modes of the two combs, each pair of neighbouring modes $fa_i$, $fb_i$, will produce a modulation signal at a specific frequency $\Delta f_i$, which is characteristic and unique to that pair of modes and therefore, to their corresponding optical wavelength.

In traditional DCS, the frequency combs are overlapped and the modulation signals with frequency components $\Delta f_i$ are detected with a photodetector. Typically the modulation frequencies $\Delta f_i$ are in the order of MHz, or hundreds or tens of kHz. The photodetector acquires a time dependent intensity signal at an acquisition rate which at least doubles the largest value of $\Delta f_i$ in the modulation spectrum. By applying a Fourier transform to the time dependent signal acquired by the photodiode, the spectral components at different $\Delta f_i$ are determined.

Different calibration methods may further be used to transpose the frequency axis from the measured radio-frequency signals $\Delta f_i$ to the corresponding optical frequencies $fa_i \approx fb_i$.

In the device of the present invention, the detector is an acoustic detector, which is generally limited to a response bandwidth much lower than the photodetectors traditionally used in DCS. There is thus a need to adapt the repetition rates of the combs so as to have all modulation frequencies $\Delta f_i$ comprised in the bandwidth of the acoustic detector.

If W is the width of the optical spectrum shared by the two frequency combs and giving rise to a sensible contribution to a modulated absorption signal in the sample, and $f_{rep}$ is the average repetition rate of the combs

$$f_{rep} = (f_{rep}a + f_{rep}b)/2 \approx fa_i \approx fb_i$$

then, the modulation signals will extend across a range of frequency of width:

$$\Delta f_{rep} \, W/f_{rep}$$

which should not be bigger than the response bandwidth of the acoustic detector $BW_{det}$. This leads to the following condition for the implementation of a photoacoustic dual comb spectrometer:

$$\Delta f_{rep} < BW_{det} \, f_{rep} / W$$

The acoustic detector of the invention can be in general any sensor of mechanic pressure waves. For example, a microphone, a piezo-electric sensor or a cantilever with an optical read-out of its mechanic deformation under a pressure wave. Acoustic sensors of different types, may have response bandwidths going from a few Hz, up to the MHz range for some very-fast detectors.

The acoustic detector may be disposed in direct mechanical contact to a solid sample, or inserted in a gas or liquid sample, or be integrated in a sample cell or sample carrier adapted to receive the sample of interest and exposed to the combined optical field of the two frequency combs.

It is worth mentioning that the frequency combs need not be identical as shown in Figure 1. Having frequency combs with substantially identical spectral envelopes is clearly advantageous, but the device of the invention may as well be realized with heterogeneous frequency combs overlapping only within a limited region of their respective spectra. In that case, the implementation condition already described ($\Delta f_{rep} < BW_{det} f_{rep} / W$) applies as well, since W has been defined as the frequency width of the optical spectrum shared by the two combs and giving rise to a sensible contribution to a modulated absorption signal in the sample.

If only one of the frequency combs has spectral components that correspond to an absorption wavelength of the sample, this absorption will give rise to an acoustic signal at a frequency equal to the repetition rate of the corresponding comb. This frequency in general will be far beyond the response bandwidth of the acoustic detector and will not generate a signal that can be interpreted as a component of the dual-comb modulated signal.

The limited response bandwidth of acoustic detectors result in relatively low data acquisition rates. This imposes rather stringent requirements on the mutual coherence time of the frequency combs 10a, 10b, which also has to be considered in respect of the response bandwidth of the acoustic detector.

Figure 2 shows a preferred embodiment of the photoacoustic spectrometer of the invention 100, featuring optical frequency combs, which can be conveniently provided with seconds-long or practically unlimited mutual-coherence. In Figure 2, the components can be assumed to be fibered elements for simplicity. However, a person skilled in the art would know how to implement the equivalent elements in a free-space configuration or in a photonic integrated circuit (PIC) device without departing from the scope of the present invention.

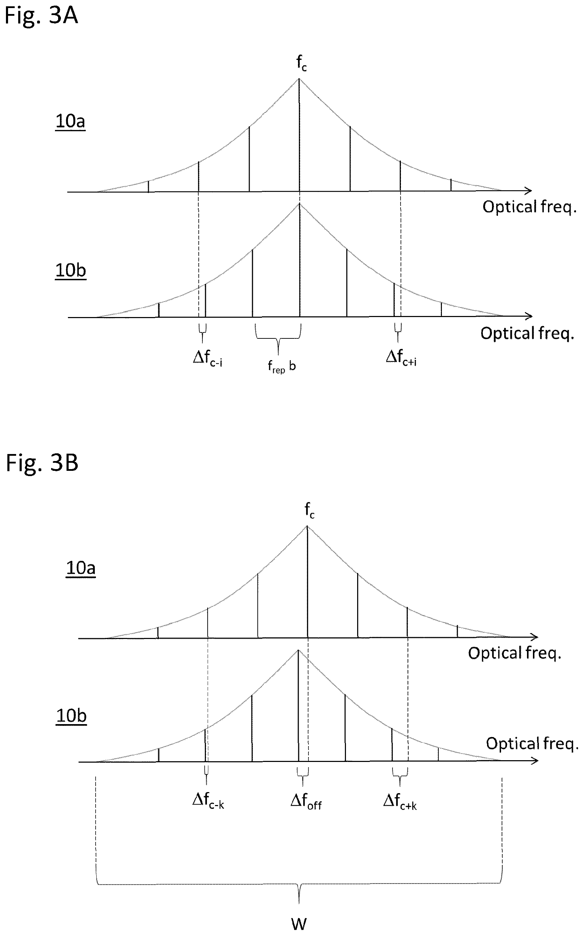

A continues-wave (cw) laser 101 is split by means of a fibred beam combiner 102 into two independent channels A, B. Each channel is provided with an optional acousto-optic modulator 103a, 103b, allowing to shift the optical frequency of the laser as will be later described in connection with Figure 3. The acousto-optic modulators 103a, 103b are driven by respective signal generators 104a, 104b at the frequencies $f_{off}$ a, $f_{off}$ b that will be applied to shift the optical frequency of the laser.

An electro-optic modulator (EOM) 105a, 105b is used to induce a strong phase modulation in each channel. The EOMs 105a, 105b are driven by respective signal generators 106a, 106b, at the frequencies $f_{rep}$ a, $f_{rep}$ b. The phase modulation of the cw laser produces side-bands in its optical spectrum which get coherently amplified and mixed in a non-linear optical parametric process to generate further side modes at the same frequency intervals, thus generating an optical frequency comb 10a, 10b. The frequency interval of the resulting comb, corresponds precisely to the modulation frequency $f_{rep}$ a, $f_{rep}$ b.

The phase relation between the different modes of the resulting frequency comb is intrinsically maintained by the nature of the parametric process at its origin. The mutual coherence of the combs 10a, 10b, can further be guaranteed by referencing the signal generators 106a, 106b, to a common RF reference.

Starting from a common cw-laser 101 as presented in Figure 2 presents the important advantage that any shift of the optical frequency of the cw-laser affects equally both frequency combs and gets cancelled in terms of frequency difference, i.e., there is no shift in the frequencies of the photoacoustic signal. Two independent lasers could also be provided as the starting point to generate the combs 10a and 10b, but in that case additional measures would be necessary for locking the optical frequency of the lasers to each other or to a common reference such as a high-finesse optical resonator or a reference continuous-wave laser.

The EOMs 105a, 105b, can be modulated at frequencies up to tens of GHz or even few hundreds of GHz, which can result in very-high repetition rate combs. High repetition rates in the range of 500 MHz to 10 GHz are particularly convenient in regard to the density of modes in the frequency spectrum. For low repetition rates, a large number of modes within a defined spectral band result in low energy per mode, as well as in the impossibility of resolving single discrete modes in the signal. On the other hand too high repetition rates in the tens of GHz, might provide insufficient sampling points to un-ambiguously detect the amplitude of absorption lines from a low-pressure gaseous sample. For liquid samples, on the other hand, a sampling interval of 100 GHz would be sufficient to study the large absorption bands typical of liquid phase samples.

In the embodiment of Figure 2, the optical frequency combs 10a, 10b, are combined in a fibered beam combiner 107.

One of the outputs of the beam combiner 107 is directed into the sample, which in the example of Figure 2 is a gas or liquid sample 110, contained in a sample cell 108, provided with an acoustic detector 109, adapted to detect the photoacoustic signals generated in the sample 110. The presence of a sample cell 108 is advantageous but not mandatory. Indeed, a simple system for environmental monitoring may be implemented in open air, by placing a microphone 109 close to a point in the air where the combined frequency combs 10a, 10b, are focused together. On the other hand, the implementation of a cell 108 has the advantages of: isolating the acoustic detector from external acoustic noise, or enabling resonant acoustic schemes to enhance the amplitude of the photoacoustic signals recorded by the acoustic detector 109 as known from the prior art.

A signal acquisition and data processing setup 111 records and performs the necessary numerical treatment of the data registered by the acoustic detector 109. The data processing setup 111 may generally comprise recording means, analogue to digital convertors (if the acoustic detector 109 produces an analogue output) and standard computing means.

A convenient optional feature of the embodiment of Figure 2 is the provision of a photodetector 112, adapted to receive a second output of the beam combiner 107. The photodetector 112 detects optically the beating components of the interfering frequency combs 10a, 10b, just like in a standard DCS scheme. Since, in general, the envelope of the combs E(a), E(b) is not a flat spectral function, it is convenient to normalize the spectrum of the photoacoustic signal by the amplitude of the spectrum of the optical modulation signal. This is particularly necessary when there is an interest to compare the relative absorption depths of several peaks distributed across the spectrum. If, on the contrary, only the frequency position of the peaks need to be determined, or if the absolute depth of the absorption peaks can be determined by calibration against a reference sample, then this spectral weighting of the photoacoustic signal is not a mandatory step.

It is obvious for a person skilled in the art, that the fraction of the frequency comb power that is directed to the photodetector 112 is not necessarily the conjugate output of the beam combiner 107. Alternatively, a small fraction of the frequency comb powers can be deviated towards the photodetector 112 by a beam sampler provided in the path of the combined beams that are used to interrogate the sample.

In the embodiment of Figure 2, the photodetector 112 is connected to the data processing setup 111 for a real time normalization of the acquired photoacoustic signals. Obviously, this step could also be conducted in post-processing.

The advantage of implementing the acousto-optic modulators 103a, 103b, shown in the exemplary embodiment of Figure 2 will be now explained in connection to Figure 3.

Figure 3A represents the optical combs 10a, 10b, that could be generated with a photoacoustic spectrometer 100 as described in Figure 2 without the acousto-optic modulators 103a, 103b. In the illustration of Figure 3, the central mode, corresponding to the original cw-laser frequency $f_c$ can be identified as the main, central mode. In general the modulation combs generated by the EOM-scheme described above are symmetric around the central frequency $f_c$. For each mode of index i at the right of the central frequency (represented here by the sub-index c+i), there is a corresponding mode at the same frequency interval to the left of the centre (indexed c-i). Consequently, the modulation signals $\Delta f_{c+i}$ and $\Delta f_{c-i}$ have the same modulation frequencies although they correspond to different optical frequencies.

This ambiguity can be resolved by offsetting the central frequency of one comb with respect to the other, as shown in Figure 3B, such as to have a unique correspondence between the detected modulation frequencies $\Delta f_i$ and the optical spectrum across the whole region of spectral overlap W. The offset frequency $\Delta f_{off}$ can be conveniently introduced by means of acousto-optic modulators, or electro-optic single sideband modulators.

Obviously, in order to introduce a frequency offset $\Delta f_{off}$, it would be enough to shift one of the frequency combs. In practice, however, given the low response bandwidth of the detector and the consequently adapted low values of $\Delta f_i$ across the spectral range W, the frequency offset that needs to be introduced between the combs can be in the order of hundreds of Hz or a few kHz. Most commercial resonant acousto-optic modulators, which are preferred for their higher efficiency, operate however at MHz frequencies. This problem can be circumvented as shown in Figure 2, by implementing two acousto-optic modulators 103a, 103b, and driving them in their resonance regimes, with frequencies $f_{off}$ a and $f_{off}$ b differing only by the small amount of the desired relative shift between the two combs:

$$\Delta f_{off} = f_{off} a - f_{off} b$$

An alternative implementation of this trick could consist in placing two acousto-optic modulators 103a, 103b in series in a single channel and oriented in opposite directions such as to have a sequential positive and negative shift of the optical frequency, resulting in a net small $\Delta f_{off}$ shift.

Also, as known by a person skilled in the art, the position of the acousto-optic modulator 103a, 103b within the channels A or B, for example, before or after the EOMs 105a, 105b, is not fundamentally relevant and can be adapted according to the convenience of the specific components.

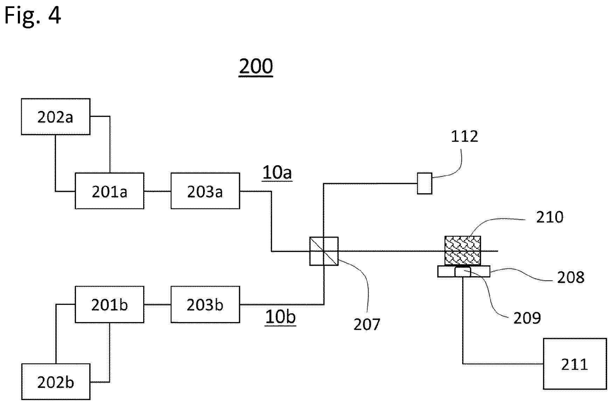

Figure 4 shows an alternative embodiment of the photoacoustic spectrometer of the invention 200. The principal difference with respect to Figure 2 is the origin of the frequency combs 10a, 10b. Here, two frequency combs are directly generated by mode-locked laser oscillators 201a, 201b. In order to provide long term stability of the frequency combs as well as mutual coherence, the combs can be conveniently stabilized by standard procedures through feedback loops 202a, 202b. These typically comprise repetition rate stabilization via actuators like e.g. intracavity piezo-mounted components, temperature regulation, etc., and carrier-envelope offset frequency ($f_{ceo}$) stabilization via the control of the current in a pump diode, or other techniques actuating on the intracavity dispersion known to a skilled person.

Another alternative to generate optical frequency combs that can be implemented in the photoacoustic spectrometer of the invention may comprise: pumping one or two micro-optical resonators with either cw or pulsed laser light, to create or broaden the spectrum of discrete optical modes by means of optical parametric processes.

Micro-resonator combs typically present repetition rates in the tens to hundreds of GHz, which can be advantageous for specific applications of the spectrometer. Also, micro-resonator combs are ideal for miniaturization and integration in photonic circuits.

The typical repetition rates of standard mode-locked laser oscillators is usually in the MHz range, e.g. 10 MHz and may reach up to the hundreds of MHz or even few GHz.

Regardless of the means used to generate the optical frequency combs, a person skilled in the art may advantageously put in place stabilization strategies equivalent to the feedback loops 202a, 202b represented in Figure 4, to improve the long term individual and mutual coherence of the combs 10a, 10b. Considering the different possible implementations to generate the optical frequency combs 10a, 10b discussed above, it is clear that the spectrometer of the invention may be realized for a range of repetition rates going from a few MHz, e.g. 10 MHz, to hundreds of GHz, e.g. 100 GHz.

When the frequency combs generated by the mode-locked laser oscillators 201a, 201b, or by any alternative means mentioned before, do not match the spectrum of absorption of a sample of interest, additional elements 203a, 203b can be provided in the setup to adapt the spectrum of the frequency combs 10a, 10b. The elements 203a, 203b may comprise: laser amplifiers to increase the power of the frequency combs, compressor schemes, non-linear spectral broadening arrangements and other nonlinear elements such as non-linear crystals, photonic crystal fibres, and other combinations known to a skilled person.

It is important to mention that, although this possibility of adapting the frequency combs 10a, 10b by means of optional elements 203a, 203b, is mentioned in connection with Figure 4, it can also be implemented in a system like the one shown in Figure 2 or any other possible embodiment of the invention as defined by the appended claims.

Coming back to Figure 4, the final frequency combs 10a, 10b, which are represented here as free space beams, are combined in a free space beam splitter 207, providing two conjugate outputs, one of which is directed towards a photodetector 112 fulfilling the same mission described above in connection to the Figure 2. The other output is equivalently directed onto a sample 210, which for the purpose of illustration is represented here as a solid sample, mounted on a sample carrier 208, comprising the acoustic detector 209.

It is obvious that the choice of solid, liquid or gaseous samples, as well as possible sample carriers or cells is totally independent of the choice of optical combs, free space, fibered or PIC design of the spectrometer according to the invention.

In regard to the signal processing, several methods known to a person skilled in DCS can be advantageously implemented in order to improve the signal to noise ratio by averaging a large number of periodically repeated measurements. Since Fourier transformation of large data sets is a demanding operation in terms of computing time and resources, it is particularly interesting to perform the averaging directly on the periodically acquired signals instead of on their spectra. Small shifts of the comb spectra have however a strong incidence in the phase of the time dependent signal, hindering a direct averaging unless appropriate phase correction methods are introduced. These methods are generally described as coherent averaging methods, but may also include more complex experimental schemes as in the so called adaptive real-time approach.

Also, different numeric methods can be implemented in order to extract the frequency components of the recorded time dependent acoustic signal, including classical calculation of the Fourier Transform or Fast Fourier Transform, or modern algorithms of trained neural networks.

Although the invention has been described in terms of particular embodiments, various modifications are possible without departing from the scope of the invention as defined in the appended claims.

**Claims**

1. A photoacoustic spectrometer (100, 200) comprising

   an acoustic detector (109, 209) configured to detect an acoustic wave generated in a sample of interest (110, 210) and
   a light source
   **characterized in that**

   the light source comprises two optical frequency combs (10a, 10b), the two optical frequency combs having at least a partial overlap of their optical spectra across an optical frequency range of width W and being spatially arranged to co-propagate with significant spatial overlap in a region of the sample (110, 210) and
   the two optical frequency combs further featuring a small difference $\Delta f_{rep}$ between their characteristic repetition rates, $\Delta f_{rep}$ being adapted to the response bandwidth $BW_{det}$ of the acoustic detector (109, 209), according to the relation:

   $$\Delta f_{rep} < BW_{det}\, f_{rep} \,/\, W$$

   where $f_{rep}$ corresponds to the average repetition rate of the two optical frequency combs (10a, 10b).

**2.** The photoacoustic spectrometer according to claim 1, wherein the two optical frequency combs (10a, 10b) cover substantially the same optical spectrum.

**3.** The photoacoustic spectrometer according to claims 1 or 2, wherein the optical frequency combs (10a, 10b) are generated from a single cw-laser (101) source split in two independent channels (A, B), each channel comprising an electro-optic modulator (105a, 105b).

**4.** The photoacoustic spectrometer according to claim 3, wherein at least one independent channel (A, B) further comprises an acousto-optic modulator (103a, 103b).

**5.** The photoacoustic spectrometer according to claim 4, wherein each of the two independent channels (A, B) comprises an acousto-optic modulator (103a, 103b).

**6.** The photoacoustic spectrometer according to claims 1 or 2, wherein the optical frequency combs (10a, 10b) are generated from two mode-locked laser oscillators (201a, 201b).

**7.** The photoacoustic spectrometer according to claims 1 or 2, wherein the optical frequency combs (10a, 10b) are generated in micro-optical resonators.

**8.** The photoacoustic spectrometer according to claims 1 or 2, wherein the optical frequency combs (10a, 10b) are stabilized by active feedback loops (202a, 202b).

**9.** The photoacoustic spectrometer according to claims 1 or 2, wherein the optical frequency combs (10a, 10b) are generated in a first region of the optical spectrum, and broadened or shifted into a different region of the optical spectrum by means of non-linear optical elements (203a, 203b).

**10.** The photoacoustic spectrometer according to claims 1 or 2, wherein the spatial overlap of the optical frequency combs (10a, 10b) is obtained by combining the optical frequency combs (10a, 10b) in a fiber-based coupler (107) or in free space, by means of a beam splitter (207).

**11.** The photoacoustic spectrometer according to claims 1 or 2, further comprising a photodetector (112) arranged to detect fractions of the power of the optical frequency combs (10a, 10b), spatially overlapped on the photodetector (112).

**12.** The photoacoustic spectrometer according to claims 1 or 2, wherein the repetition rate $f_{rep}$ of the optical frequency combs (10a, 10b), is in a range from 10 MHz to 100 GHz.

**13.** The photoacoustic spectrometer according to claim 12, wherein the repetition rate $f_{rep}$ of the optical frequency combs (10a, 10b), is in a range from 500 MHz to 100 GHz.

**14.** A method of using the photoacoustic spectrometer (100, 200) according to any one of claims 1 to 13 for performing photoacoustic spectroscopy, the method comprising the steps of:

generating two optical frequency combs (10a, 10b) having at least a partial overlap of their optical spectra across an optical frequency range of width W, and featuring a small difference $\Delta f_{rep}$ between their characteristic repetition rates, wherein $\Delta f_{rep}$ is adapted to the response bandwidth $BW_{det}$ of an acoustic detector (109, 209), according to the relation:

$$\Delta f_{rep} < BW_{det}\, f_{rep}\, /\, W$$

where $f_{rep}$ corresponds to the average repetition rate of the two optical frequency combs (10a, 10b),
spatially arranging the two optical frequency combs (10a, 10b) to co-propagate with significant spatial overlap in a region of a sample of interest (110, 210),
recording an acoustic wave generated at the sample of interest (110, 210) when the two optical frequency combs impinge on it, by means of the acoustic detector (109, 209) and
determining the frequency components of the recorded acoustic wave.

**15.** The method according to claim 14 comprising, between the steps of spatially arranging the two optical frequency combs and recording an acoustic wave , additional steps comprising:

extracting power fractions of the optical frequency combs (10a, 10b) and arranging them to spatially overlap on a photodetector (112),
recording a time-domain interferogram from the photodetector signal,
determining the frequency components of the recorded interferogram to obtain a spectrum of the optical heterodyne signal resulting from the interference of the two optical frequency combs (10a, 10b) and performing an additional step after the step of determining the frequency components, comprising:
using the obtained spectrum of the optical heterodyne signal as an input to a weighting function to normalize the spectrum of the determined frequency components of the recorded acoustic wave.

## Fig. 1

## Fig. 2

## Fig. 3A

10a

$f_c$

Optical freq.

10b

Optical freq.

$\Delta f_{c-i}$    $f_{rep}$ b    $\Delta f_{c+i}$

## Fig. 3B

10a

$f_c$

Optical freq.

10b

Optical freq.

$\Delta f_{c-k}$    $\Delta f_{off}$    $\Delta f_{c+k}$

W

Fig. 4

<u>200</u>

```
┌───────┐
│ 202a  │
└───────┘
    ┌───────┐   ┌───────┐   10a
    │ 201a  │───│ 203a  │
    └───────┘   └───────┘

┌───────┐   ┌───────┐
│ 201b  │───│ 203b  │   10b
└───────┘   └───────┘
┌───────┐
│ 202b  │
└───────┘
```

112

210

208

209

207

┌───────┐
│  211  │
└───────┘

Europäisches
Patentamt

European
Patent Office

Office européen
des brevets

## EUROPEAN SEARCH REPORT

Application Number

EP 20 15 6763

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 361 234 A1 (NOKIA TECHNOLOGIES OY [FI]) 15 August 2018 (2018-08-15) | 1-3,6-15 | INV. G01N21/17 |
| Y | * paragraph [0015] - paragraph [0060] * <br> * figures 2-6 * | 4,5 | G01N29/24 <br><br> ADD. |
| Y | MARTIN-MATEOS PEDRO ET AL: "Dual-Comb Architecture for Fast Spectroscopic Measurements and Spectral Characterization", IEEE PHOTONICS TECHNOLOGY LETTERS, IEEE SERVICE CENTER, PISCATAWAY, NJ, US, vol. 27, no. 12, 15 June 2015 (2015-06-15), pages 1309-1312, XP011582746, ISSN: 1041-1135, DOI: 10.1109/LPT.2015.2421276 [retrieved on 2015-05-27] * figures 1, 2 * * section "II. DUAL-COMB SETUP FOR SPECTROSCOPY AND SPECTRAL CHARACTERIZATION" * | 4,5 | G01B9/02 |
| Y | PEDRO MARTÍN-MATEOS ET AL: "Electro-Optic Dual Optical Frequency Combs: New Architectures and Opportunities Beyond Spectroscopy", LIGHT, ENERGY AND THE ENVIRONMENT, 2016, page FM4D.3, XP055708294, Washington, D.C. DOI: 10.1364/FTS.2016.FM4D.3 ISBN: 978-0-9600380-4-6 * figure 1(b) * | 4,5 | |

TECHNICAL FIELDS
SEARCHED      (IPC)

G01N
G01B
G02F

-/--

The present search report has been drawn up for all claims

| Place of search | Date of completion of the search | Examiner |
|---|---|---|
| Munich | 24 June 2020 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 15 6763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PEDRO MARTÍN-MATEOS ET AL: "Frequency accurate coherent electro-optic dual-comb spectroscopy in real-time", OPTICS EXPRESS, vol. 26, no. 8, 16 April 2018 (2018-04-16), pages 9700-188, XP055643218, DOI: 10.1364/OE.26.009700 * figure 1 * | 4,5 | |
| A,D | SADIEK IBRAHIM ET AL: "Optical Frequency Comb Photoacoustic Spectroscopy", 2019 CONFERENCE ON LASERS AND ELECTRO-OPTICS (CLEO), OSA, 5 May 2019 (2019-05-05), pages 1-2, XP033569776, DOI: 10.23919/CLEO.2019.8749688 [retrieved on 2019-06-27] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 24 June 2020 | Sauerer, Christof |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 15 6763

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2020

| Patent document cited in search report | | Publication date | Patent family member(s) | | Publication date |
|---|---|---|---|---|---|
| EP 3361234 | A1 | 15-08-2018 | EP | 3361234 A1 | 15-08-2018 |
| | | | US | 2019056359 A1 | 21-02-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5748309 A

**Non-patent literature cited in the description**

- **I. SADIEK et al.** Optical Frequency Comb Photoacoustic Spectroscopy. *Conference Proceedings, CLEO,* 2019

- **J. UOTILA et al.** Fourier transform infrared measurement of solid-, liquid-, and gas-phase samples with a single photoacoustic cell. *Appl. Spectrosc.,* 2008, vol. 62, 655-660